**Europäisches Patentamt**

**European Patent Office**

**Office européen des brevets**

(19)

(11) Veröffentlichungsnummer: **0 321 935 B1**

# EUROPÄISCHE PATENTSCHRIFT

(12)

(45) Veröffentlichungstag der Patentschrift:
02.10.91 Patentblatt 91/40

(51) Int. Cl.$^5$: **B23Q 1/18, B25J 9/10,**
**F16H 7/10**

(21) Anmeldenummer: **88121343.3**

(22) Anmeldetag: **21.12.88**

(54) **Lineareinheit.**

(30) Priorität: **22.12.87 DE 3743577**

(43) Veröffentlichungstag der Anmeldung:
**28.06.89 Patentblatt 89/26**

(45) Bekanntmachung des Hinweises auf die
Patenterteilung:
**02.10.91 Patentblatt 91/40**

(84) Benannte Vertragsstaaten:
**AT CH DE ES FR GB IT LI NL SE**

(56) Entgegenhaltungen:
CH-A- 561 102
DE-A- 3 335 603
DE-B- 1 077 938
DE-U- 8 422 524
DE-U- 8 622 383
US-A- 2 949 034
US-A- 3 832 910

(73) Patentinhaber: **IEF WERNER GMBH**
**Schulstrasse 7**
**W-7743 Furtwangen-Neukirch (DE)**

(72) Erfinder: **Bär, Manfred**
**Adolf Heer Strasse 14**
**W-7741 Vöhrenbach (DE)**
Erfinder: **Meyer, Andreas**
**Buchenweg 8**
**W-7743 Furtwangen (DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**W-7730 VS-Villingen-Schwenningen (DE)**

## Beschreibung

Die Erfindung betrifft eine Lineareinheit gemäß dem Oberbegriff des Anspruches 1.

Aus dem DE-GM 8622383 ist eine Lineareinheit mit einem Grundkörper und zwei Endplatten bekannt, zwischen denen zwei Laufschienen befestigt sind, die einen Laufwagen tragen. Der Laufwagen ist mittels eines über eine Spannschraube vorgespannten, an seiner Unterseite befestigten Zahnriemens verfahrbar. Der Zahnriemen ist über zwei Ritzel geführt, von denen eines von einem Motor angetrieben ist. Diese Anordnung ermöglicht zwar eine spielfreie Führung des Laufwagens, jedoch ist die notwendige Einstellung einer definierten Spannung des Zahnriemens mit erheblichen Schwierigkeiten verbunden. Dadurch ergeben sich Probleme mit der Positioniergenauigkeit des Laufwagens und die Lebensdauer des Zahnriemens kann beeinträchtigt sein.

Die Aufgabe der Erfindung besteht darin, eine gattungsgemäße Lineareinheit zu schaffen, die eine einfache Montage und Justierung des Zahnriemens bei einer hohen Positioniergenauigkeit des Laufwagens gewährleistet.

Diese Aufgabe wird bei einer gattungsgemäßen Lineareinheit durch die im kennzeichnenden Teil von Anspruch 1 angegebenen Merkmale gelöst. Die Unteransprüche betreffen vorteilhafte Ausführungsbeispiele der Erfindung.

Bei einer erfindungsgemäßen Lineareinheit stellt sich unter Verwendung eines aus Bandmaterial zugeschnittenen Zahnriemens beim Spannen automatisch eine definierte Spannung des Zahnriemens ein. Der Zahnriemen ist mit seiner optimalen Spannung betreibbar, so daß sich die Lebensdauer des Zahnriemens verlängert und die Positioniergenauigkeit des Laufwagens erhöht.

Als Zahnriemen ist vorzugsweise ein Präzisionszahnriemen vorgesehen, der aus einer elastischen Kunststoffhülle besteht, beispielsweise aus einer im Gießverfahren herstellbaren Polyurethan-Hülle, in die mehrere Stahleinlagen als Festigkeitsträger eingebettet sind.

Zweckmäßigerweise besitzt der Zahnriemen vor dem Einbau Untermaß und wird erst beim Spannen auf seine Sollteilung gestreckt. Für besonders präzise Positionierungen wird vorzugsweise ein Präzisionszahnriemen verwendet, der bei einer Dehnung von etwa 0,4% mit seiner maximal zulässigen Umfangskraft beaufschlagt ist, die etwa 700 bis 1000 N beträgt. Der Zahnriemen weist in bevorzugter Ausführung im gespannten Zustand eine Dehnung von etwa 0.2% auf. Bei dieser Dehnung ist einerseits eine ausreichende Positioniergenauigkeit des Laufwagens gewährleistet, andererseits stehen noch etwa 50% der maximal zulässigen Umfangskraft des Zahnriemens zur Kraftübertragung zur Verfügung.

Der Zahnriemen sowie Antriebs- und Umlenkritzel sind vorzugsweise so aufeinander abgestimmt, daß der Zahnriemen im gespannten Zustand spielfrei zwischen die Zahnflanken des Antriebsritzels eingreift. Dadurch wird die Bewegung des Antriebsritzels spielfrei auf den Laufwagen übertragen.

Die Spanneinrichtung für den Zahnriemen weist in bevorzugter Ausführung eine Endplatte auf, an der Spannschrauben angreifen, die die Achse des Umlenkritzels durchsetzen und mittels derer der Abstand der Achse des Umlenkritzels von der Endplatte einstellbar ist. In vorteilhafter Weiterbildung sind zur Begrenzung des Stellweges dabei Distanzstücke zwischen der Achse des Umlenkritzels und der Endplatte vorgesehen. Der Zahnriemen kann bei dieser Ausführung einfach durch Anziehen der Spannschrauben gespannt werden. Die Länge des Stellweges — und damit die erreichbare Dehnung des Zahnriemens — ist dabei durch die Länge der Distanzstücke vorgegeben.

Die Erfindung ist nachstehend anhand eines Ausführungsbeispieles, das in den Zeichnungen veranschaulicht ist, im einzelnen erläutert.

In den Zeichnungen zeigen

Figur 1    eine Aufsicht der Lineareinheit,
Figur 2    eine Seitenansicht der Einheit in Richtung II-II in Figur 1 gesehen,
Figur 3    eine Ansicht der Einheit gemäß Figur 2 ohne Endplatte,
Figur 4    eine teilweise geschnittene Seitenansicht der Spanneinrichtung,
Figur 5    eine Aufsicht auf die Anordnung gemäß Figur 4 von links gesehen,
Figur 6    eine teilweise geschnittene Seitenansicht der Spanneinrichtung gemäß Figur 4 im gespannten Zustand und
Figur 7    eine Ansicht der Anordnung gemäß Figur 6 von links gesehen,

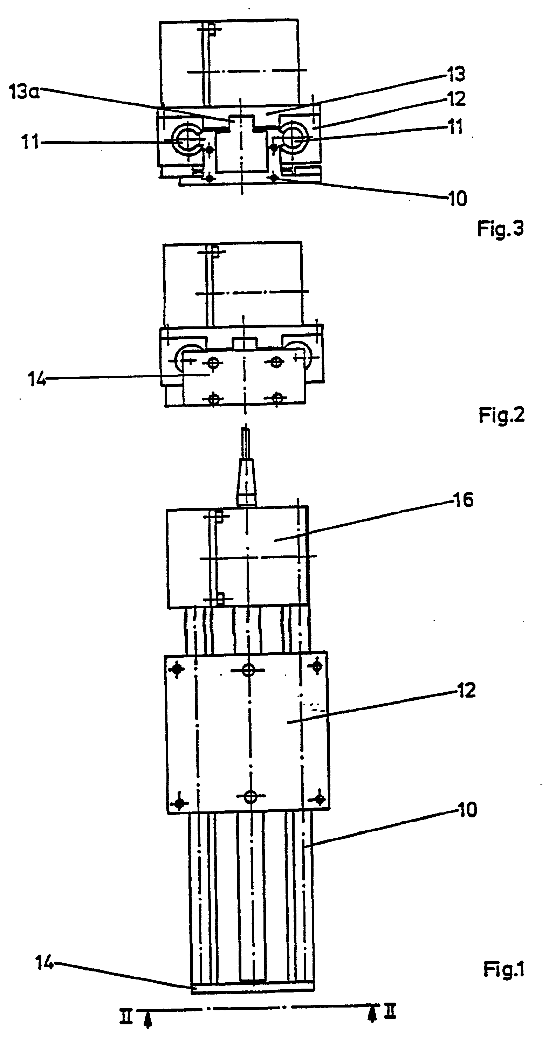

Die Lineareinheit, wie sie in den Figuren 1 bis 3 dargestellt ist, besteht im wesentlichen aus einem als Profil ausgebildeten Grundkörper 10 mit Laufschienen 11, auf welchen ein Laufwagen 12 zwischen der Endplatte 14 und einer Antriebseinheit 16 verfahrbar ist. An der Unterseite der Deckplatte 13 des Laufwagens 12, nämlich im Bereich der Aussparung 13a, ist ein Zahnriemen 26 mit seinen beiden Enden befestigt, der einerseits über ein an der Endplatte 14 befestigtes Umlenkritzel 18 und andererseits über ein an der Motoreinheit 16 vorgesehenes Antriebsritzel geführt ist.

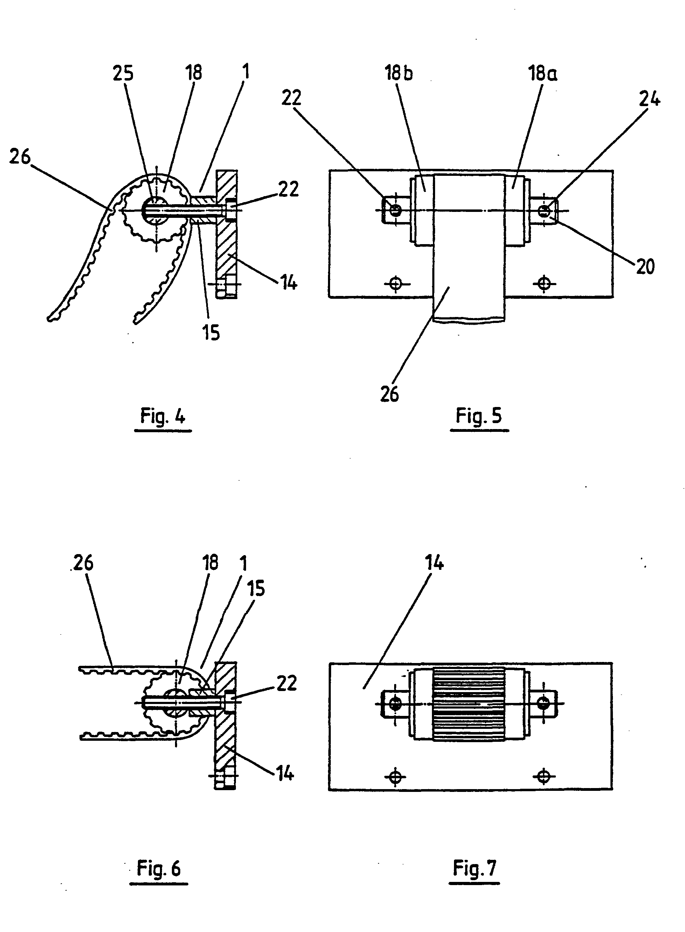

Mit den Figuren 4 bis 7 sind Einzelheiten der Spanneinrichtung 1 für das Umlenkritzel 18 dargestellt. Die Achse 25 des Umlenkritzels 18 ist von Spannschrauben 22, 24 gehalten, welche die Endplatte 14 und Distanzstücke 15 durchsetzen und in Gewindebohrungen der Achse 25 eingreifen. Durch Verdrehen der Spannschrauben 22 und 24 ist bei dieser Anordnung folglich das Umlenkritzel 18 parallel verschiebbar, wodurch der über das Umlenkritzel 18 geführte Zahnriemen 26 gespannt werden kann. Der Spannweg ist dabei durch die Länge der Distanzstücke 15 vorgegeben. Der Zahnriemen 26 läßt sich somit auf die vorgeschriebene Umfangskraft spannen, wobei ein Überdehnen des Zahnriemens, welches zu Ungenauigkeiten in der Positionierung und zu einer geringeren Lebensdauer führen würde, verhindert wird.

Zur Kraftübertragung ist ein Präzisionszahnriemen 26 vorgesehen, der aus einer Polyurethan-Hülle besteht, in die Stahleinlagen als Festigkeitsträger eingebettet sind. Der Zahnriemen ist bei einer Dehnung von etwa 0.4% mit seiner maximal zulässigen Umfangskraft von etwa 840 N beaufschlagt. Der Zahnriemen wird dabei in Abhängigkeit von der Gesamtlänge des Grundkörpers so dimensioniert, daß die Dehnung des Zahnriemens im gespannten Zustand etwa 0.2% beträgt. Damit ergibt sich einerseits ein spielfreier Eingriff der Zahnflanken des Zahnriemens zwischen Antriebs- und Umlenkritzel, andererseits können auch ausreichend große Kräfte durch den Laufwagen 12 übertragen werden. Bei der Dimensionie rung des Zahnriemens bezieht sich die Längenangabe immer nur auf den eingebauten und vorgespannten Zustand. Die Kenngröße des Zahnriemens bildet die Zähnezahl und nicht die Teilung, da diese ja von der Spannung abhängig ist. Die Anzahl der notwendigen Zähne im gespannten Zustand weicht hierbei von derjenigen im ungespannten Zustand nicht ab. Die Zähnezahl ergibt sich aus dem Quotienten von Zahnriemenlänge und Teilung im gespannten Zustand, wobei die Zahnriemenlänge durch die geometrischen Parameter der Konstruktion, wie Länge des Grundkörpers 10, Motorflanschbreite, Zahnscheiben- und Achsdurchmesser von Antriebs- und Umlenkritzel 18, Länge der Distanzstücke 15 und Zahnriemendicke festgelegt ist.

Bei der Montage wird der Zahnriemen 26 im entspannten Zustand problemlos über das Umlenkritzel 18 gelegt und anschließend mit einem Mitnehmer, welcher den Laufwagen 12 bewegt, fest verbunden. Durch Betätigen der Spannschrauben 22, 24 wird das Umlenkritzel 18 gegen die Endplatte 14 bewegt und hierdurch der Zahnriemen gestreckt, wobei die erreichbare Dehnung des Zahnriemens durch die Distanzstücke 15 vorgegeben ist. In der Endposition ist der Zahnriemen 26 so weit gedehnt, daß seine Zähne spielfrei zwischen die Zahnflanken des Antriebsritzels und des Umlenkritzels 18 eingreifen.

Bei dieser Montage ist die Zähnezahl des Zahnriemens in oben beschriebener Weise in Abhängigkeit von den geometrischen Parametern der Konstruktion für jeden Anwendungsfall zu ermitteln.

Da der Zahnriemen gegen starkes Biegen und Knicken empfindlich ist, darf er bei der Montage nicht mit Gewalt aufgelegt werden. Für die angestrebte Positionier- und Wiederholgenauigkeit ist, wie oben dargelegt, Ausbildung und Montage des Präzisionszahnriemens entscheidend.

Antriebs- und Umlenkritzel sind mit Bordscheiben 18a, b ausgestattet, die der seitlichen Führung des Zahnriemens 26 dienen. Dadurch wird der Zahnriemen in seiner Richtung stabilisiert. Dabei muß jedoch das Spiel zwischen Zahnriemen 26 und den Bordscheiben 18a und b noch so groß sein, daß ein zu starker Verschleiß durch Reibung vermieden wird.

**Patentansprüche**

1. Lineareinheit, bestehend aus einem der Führung dienenden Grundkörper (10) mit Laufschienen (11), auf welchen ein Laufwagen (12) mittels eines Zahnriemens (26) zwischen zwei Endanschlägen verfahrbar ist, wobei der Zahnriemen (26) über das von einem Motor (16) angetriebene Antriebsritzel und ein Umlenkritzel (18) geführt ist und mit seinen beiden Enden am Laufwagen (12) befestigt ist, dadurch gekennzeichnet, daß eine Spanneinrichtung (1) zum Spannen des Zahnriemens (26) vorgesehen ist, mittels derer die Achse (25) eines der beiden Ritzel (18) verschiebbar ist, wobei eine Einrichtung (15) zur Begrenzung des Spannweges vorgesehen ist, um eine definierte Spannung des Zahnriemens (26) einzustellen.

2. Lineareinheit nach Anspruch 1, dadurch gekennzeichnet, daß der Zahnriemen (26) aus einer elastischen Kunststoffhülle besteht, in die als Festigkeitsträger Stahleinlagen eingebettet sind.

3. Lineareinheit nach Anspruch 1 oder 2, dadurch gekennzeichnet, daß der Zahnriemen (26) vor dem Einbau Untermaß besitzt und erst in gespanntem Zustand auf seine Sollteilung gestreckt ist.

4. Lineareinheit nach Anspruch 1, 2 oder 3, dadurch gekennzeichnet, daß der Zahnriemen (26) bei einer Dehnung von etwa 0.4% mit seiner maximal zulässigen Umfangskraft beaufschlagt ist.

5. Lineareinheit nach einem der vorhergehenden Ansprüche, dadurch gekennzeichnet, daß die maximal zulässige Umfangskraft des Zahnriemens (26) etwa 700 bis 1000 N beträgt.

6. Lineareinheit nach einem der vorhergehenden Ansprüche, dadurch gekennzeichnet, daß der Zahnriemen im gespannten Zustand um etwa 0,2% gedehnt ist.

7. Lineareinheit nach einem der vorhergehenden Ansprüche, dadurch gekennzeichnet, daß der Zahnriemen (26) im gespannten Zustand spielfrei zwischen die Zahnflanken des Antriebsritzels und des Umlenkritzels (18) eingreift.

8. Lineareinheit nach einem der vorhergehenden Ansprüche, dadurch gekennzeichnet, daß die Spanneinrichtung (1) eine Endplatte (14) aufweist, an der Spannelemente (22, 24) angreifen, mittels derer der Abstand der Achse (25) des Umlenkritzels (18) von der Endplatte (14) einstellbar ist.

9. Lineareinheit nach Anspruch 8, dadurch gekennzeichnet, daß als Spannelemente (22, 24) Schrauben vorgesehen sind, die die Achse (25) des Umlenkritzels (18) durchsetzen.

10. Lineareinheit nach Anspruch 8 oder 9, dadurch gekennzeichnet, daß zwischen der Achse (25) des Umlenkritzels (18) und der Endplatte (14) Distanzstücke (15) zur Begrenzung des Stellweges vorgesehen sind.

11. Lineareinheit nach einem der vorhergehenden Ansprüche, dadurch gekennzeichnet, daß die Zahnscheiben mit Bordscheiben (18a, b) zur Führung des Zahnriemens (26) versehen sind.

## Revendications

1. Unité linéaire, constituée par un corps de base (10) servant à des fins de guidage et muni de rails (11) sur lesquels un chariot (12) est déplaçable, au moyen d'une courroie crantée (26), entre deux butées terminales, la courroie crantée (26) étant guidée par l'intermédiaire du pignon moteur entraîné par un moteur (16) et d'un pignon de renvoi (18) et étant fixée par ses deux extrémités au chariot (12), caractérisée en ce qu'il est prévu un mécanisme tendeur (1) destiné à tendre la courroie crantée (26) et au moyen duquel l'axe (25) de l'un (18) des deux pignons peut être amené à coulisser, un mécanisme (15) destiné à limiter le trajet de serrage étant prévu pour régler une tension bien définie de la courroie crantée (26).

2. Unité linéaire selon la revendication 1, caractérisée en ce que la courroie crantée (26) est constituée par une enveloppe en matière synthétique élastique dans laquelle sont noyées des pièces d'acier en tant qu'éléments renforçateurs.

3. Unité linéaire selon la revendication 1 ou 2, caractérisée en ce que la courroie crantée (26) présente avant le montage des dimensions inférieures aux cotes prescrites et n'est allongée, jusqu'à obtention de son pas nominal, qu'à l'état tendu.

4. Unité linéaire selon l'une quelconque des revendications précédentes, caractérisée en ce que pour un allongement d'environ 0,4% la courroie crantée (26) est soumise à sa force périphérique maximale admissible.

5. Unité linéaire selon l'une quelconque des revendications précédentes, caractérisée en ce que la force périphérique maximale admissible de la courroie crantée (26) est d'environ 700 à 1000 N.

6. Unité linéaire selon l'une quelconque des revendications précédentes, caractérisée en ce que la courroie crantée à l'état tendu est allongée d'environ 0,2%.

7. Unité linéaire selon l'une quelconque des revendications précédentes, caractérisée en ce que la courroie crantée (26) s'engage, à l'état tendu, sans jeu entre les flancs des dents du pignon moteur et du pignon de renvoi (18).

8. Unité linéaire selon l'une quelconque des revendications précédentes, caractérisée en ce que le mécanisme tendeur (1) présente une plaque terminale (14) sur laquelle agissent des organes tendeurs (22, 24) au moyen desquels la distance de l'axe (25) du pignon de renvoi (18) à la plaque terminale (14) est réglable.

9. Unité linéaire selon la revendication 8, caractérisé en ce qu' en tant qu'organes tendeurs (22, 24) sont prévues des vis qui traversent l'axe (25) du pignon de renvoi (18).

10. Unité linéaire selon la revendication 8 ou 9, caractérisée en ce qu'entre l'axe (25) du pignon de renvoi (18) et la plaque terminale (14) sont prévues des pièces d'espacement (15) pour limiter le trajet de réglage.

11. Unité linéaire selon l'une quelconque des revendications précédentes, caractérisée en ce que les pignons sont munis de poulies marginales (18a, b) pour guider la courroie crantée (26).

## Claims

1. A linear unit consisting of a base element (10) providing guidance and comprising runner rails (11) on which a travelling wagon (12) can be moved between two end stops by means of a toothed belt (26), wherein the toothed belt (26) is led over a drive pinion driven by a motor (16) and a return pinion (18) and is fastened at both its ends to the travelling wagon (12), characterized in that a tensioning device (1) is provided for tensioning the toothed belt (26), by means of which device the shaft (25) of one of the two pinions (18) can be moved, and wherein a device (15) for limiting the extent of tensioning movement is provided in order to provide a defined tensioning of the toothed belt (26).

2. A linear unit according to claim 1, characterized in that the toothed belt (26) consists of an elastic casing made of plastic in which steel inserts are embedded as strengtheners.

3. A linear unit according to claim 1 or claim 2, characterized in that before installation the toothed belt (26) is undersized and is stretched to its desired spacing only after it is in the tensioned state.

4. A linear unit according to claim 1, 2 or 3, characterized in that the toothed belt (26) when extended by approximately 0.4% is loaded by its maximal permissible peripheral force.

5. A linear unit according to any one of the preceding claims, characterized in that the maximal permissible peripheral force of the toothed belt (26) is approximately 700 to 1000 N.

6. A linear unit according to any one of the preceding claims, characterized in that the toothed belt in its tensioned state is stretched by approximately 0. 2%.

7. A linear unit according to any one of the preceding claims, characterized in that the toothed belt (26) in its tensioned state engages without play between the flanks of the teeth of the drive pinion and the return pinion (18).

8. A linear unit according to any one of the preceding claims, characterized in that the tensioning device (1) comprises an end plate (14) in which tensioning elements (22, 24) engage, by means of which the distance of the shaft (25) of the return pinion (18) from the end plate (14) can be adjusted.

9. A linear unit according to claim 8, characterized in that screws which pass through the shaft (25) of the return pinion (18) are provided as the tensioning elements (22, 24).

10. A linear unit according to claim 8 or claim 9, characterized in that spacers (15) for limiting the extent of adjustment are provided between the shaft (25) of the return pinion (18) and the end plate (14).

11. A linear unit according to any one of the preceding claims, characterized in that the toothed wheels are equipped with circular edge flanges (18a, b) for guiding the toothed belt (26).

13a

13

12

11

11

10

Fig.3

14

Fig.2

16

12

10

14

II II

Fig.1

Fig. 4

Fig. 5

Fig. 6

Fig. 7